(19) Europäisches Patentamt
European Patent Office
Office européen des brevets

(11) **EP 3 096 117 A1**

(12) **EUROPEAN PATENT APPLICATION**

(43) Date of publication:
**23.11.2016 Bulletin 2016/47**

(51) Int Cl.:
***G01K 5/02*** *(2006.01)*      ***G01K 11/32*** *(2006.01)*
***G01K 5/32*** *(2006.01)*

(21) Application number: **15168623.5**

(22) Date of filing: **21.05.2015**

| | |
|---|---|
| (84) Designated Contracting States:<br>**AL AT BE BG CH CY CZ DE DK EE ES FI FR GB<br>GR HR HU IE IS IT LI LT LU LV MC MK MT NL NO<br>PL PT RO RS SE SI SK SM TR**<br>Designated Extension States:<br>**BA ME**<br>Designated Validation States:<br>**MA** | • **Duraibabu, Dinesh Babu**<br>  **County Limerick (IE)**<br>• **Leen, Gabriel**<br>  **Limerick (IE)**<br>• **Dooly, Gerard**<br>  **Limerick (IE)**<br>• **Lewis, Elfed**<br>  **County Clare (IE)** |
| (71) Applicant: **University of Limerick<br>Limerick (IE)** | (74) Representative: **Keane, David Colman<br>Murgitroyd & Company<br>Scotland House<br>165-169 Scotland Street<br>Glasgow G5 8PL (GB)** |
| (72) Inventors:<br>• **Poeggel, Sven<br>18184 Neu Broderstorf (DE)** | |

(54) **A TEMPERATURE SENSOR**

(57)     A temperature sensor (1) has a pressure sensor (10), the distal end of which is inserted in a sealed chamber 2 filled with a liquid. The pressure sensor has a light guide (4), a cavity (14) at a distal end of the light guide, a diaphragm (11) forming a wall of the cavity and being configured to deflect with applied pressure, and a detector to detect changes in light reflection due to deflection of the diaphragm. The liquid (3) which changes volume in response to temperature changes and this volume change is sufficient to change the pressure applied on the diaphragm (11), and the a interrogation system processes pressure data and/or light reflection data to generate an output indicating temperature of the fluid in the chamber.

Fig.1

**Description**

Introduction

The invention relates to sensors.

Our prior patent specification US8764678 describes a pressure sensor having a Fabry-Perot interferometer ("FPI") and an in-fiber Bragg grating ("FBG"). Deflection of a glass diaphragm changes length of a cavity at the end of the fiber. The FBG is used as a reference sensor to measure temperature and to eliminate temperature cross-sensitivity from the pressure measurement.

The invention is directed towards achieving improved sensitivity and resolution in a sensor.

Summary of the Invention

According to the invention, there is provided a temperature sensor comprising:

a pressure sensor comprising:

a light guide,
a cavity at a distal end of the light guide,
a diaphragm forming a wall of the cavity and being configured to deflect with applied pressure,
a detector to detect changes in light reflection due to deflection of the diaphragm;

a chamber containing at least the distal end of the pressure sensor and a fluid which changes volume in response to temperature change sufficient to change pressure applied on the diaphragm; and
a processor configured to process pressure data and/or light reflection data and to generate an output indicating temperature.

In one embodiment, the chamber fluid is a liquid. In one embodiment, the liquid is an oil. In one embodiment, the chamber has a volume of at least $0.1mm^3$.

In one embodiment, the fluid chamber is cylindrical. In one embodiment, the pressure sensor cavity is a Fabry-Perot interferometer.

In one embodiment, the pressure sensor includes a fibre Bragg Grating (FGB) for coarse temperature measurement, in which thermal expansion or construction of the FBG causes a shift of the Bragg wavelength. In one embodiment, the FBG has a temperature resolution of 0.1 °C or higher. In one embodiment, the Bragg Grating is in-fiber.

In one embodiment, the diaphragm has a thickness in the range of $1\mu m$ to $10\mu m$. In one embodiment, the diaphragm has a diameter which is at least 40 times the diaphragm thickness.

In one embodiment, the chamber is transparent. In one embodiment, the chamber has an outside lateral dimension of less than 1mm.

In one embodiment, the light guide is an optical fibre.

In another aspect, the invention provides a method of measuring temperature changes in human tissue or fluids, the method comprising the steps of inserting a chamber of a sensor as defined above in any embodiment into the tissue or fluid and monitoring outputs from the processor.

In one embodiment, the method is performed in medical applications to measure temperature changes in tissue or fluids while *in-vivo.*

In one embodiment, the method is performed in medical radiotherapy applications to measure temperature changes in tissue or fluid and to correlate the temperature changes with radiation dose.

In another aspect, the invention provides a method of measuring temperature changes in industrial applications, comprising the steps of placing the chamber of a sensor as defined above in any embodiment at a desired location and monitoring the processor output.

Detailed Description of the Invention

The invention will be more clearly understood from the following description of some embodiments thereof, given by way of example only with reference to the accompanying drawings in which:-

Fig. 1 is a diagrammatic side view of a temperature sensor of the invention;

Fig. 2 is a perspective diagram showing the pressure sensor forming part of the temperature sensor;

Fig. 3 is a plot showing operation of the temperature sensor;

Fig. 4 is a diagram illustrating an experimental set-up for testing the temperature sensor:

Fig. 5 is a diagram illustrating operation of control software for operation of the temperature sensor; and

Fig. 6 is a temperature vs. time plot of the temperature sensor vs. BMP 085™ temperature sensor to show performance of the sensor.

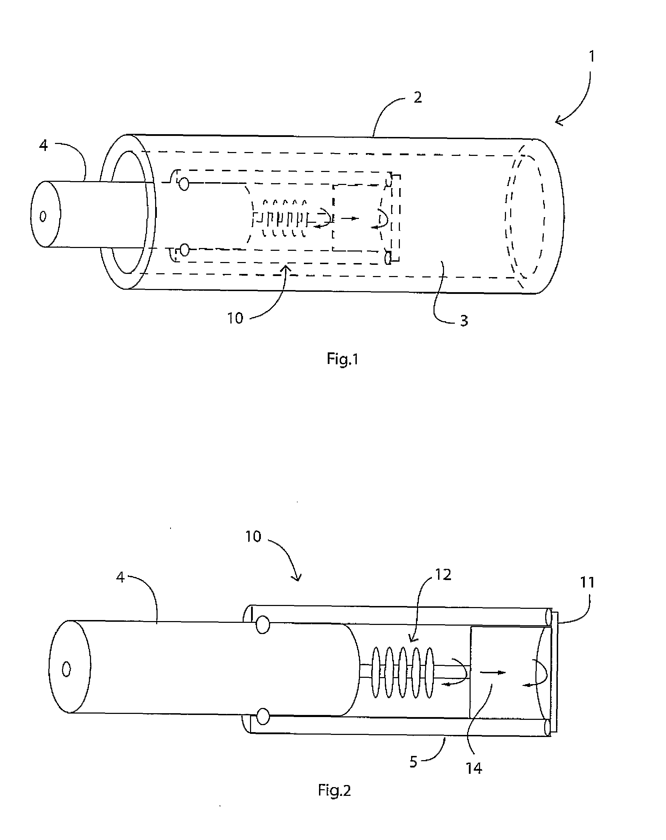

Referring to Figs. 1 and 2 a temperature sensor 1 comprises a chamber 2 of cylindrical shape and containing a fluid (for example, oil) 3. A sensor 10 of the type described in US8764678 is inserted into the chamber 2 and is sealed to the internal surface of the chamber by fusing or bonding to provide a closed volume filled with oil 3.

The pressure sensor 10 comprises a fibre 4, an FBG 12 within a capillary 5, and a cavity 14 defined between the FBG 12 and a diaphragm 11. The pressure sensor 10 is described in detail in US8764678, the contents of which are incorporated herein.

The FBG 12 is fabricated by making a periodic change in the refractive index in the core of the fiber 4. The periodicity is given by the distance of each change causing a reflection of light at the corresponding Bragg-wavelength ($\lambda_B$). A change of temperature ($\Delta$T) cause an expansion/contraction of the glass fibre 4, which in turn changes the refractive index period of the inscribed fibre Bragg grating. This results in a shift of the Bragg-wavelength in the optical spectrum, shown in (1).

$$\Delta\lambda_B(T) = \lambda_B(1 + \xi)\Delta T \qquad (1)$$

The FPI sensor 10 is based on a single-mode fibre (SMF) 4 surrounded by a capillary 5 and closed by a thin section of multi-mode fibre (MMF) 11, which forms the FPI sensor diaphragm. The construction results in a sealed cavity 14, filled with a gas (e.g. air) only. The diaphragm is thin in thickness (for example, diaphragm thickness = h = ~2$\mu$m) and respectively large in diameter: 2r = 130$\mu$m, in general preferably at least 40 times the thickness. This results in a high sensitivity to pressure change in the surrounding medium, as illustrated in Equation 2, where $\Delta$G is the diaphragm deflection, $\mu$ is Poisson's ratio for glass, r is the radius of the diaphragm, h is the diaphragm thickness, E is Young's modulus and $\Delta$P is the change in pressure.

$$\Delta G = \frac{3}{16} \cdot \frac{(1-\mu^2)}{E} \cdot \frac{r^4}{h^3} \cdot \Delta P \qquad (2)$$

The chamber 2 has a diameter of $d_o$ = 0.87mm and is closed on one side and completely filled with a fluid (e.g. oil) 3. The pressure sensor (OFPS) 10 enters the oil-filled chamber from the other side of the capillary and is sealed with, for example: water/oil resistant adhesive, or can be fused to the FPI glass capillary 5. The fluid-filled chamber 2 can be composed of materials other than glass e.g. a metal in a different embodiments, however as a glass-capillary is transparent, it allows for observing impurities such as air-bubbles that can act as buffer (i.e. low pass filter).in terms of the pressure experienced inside the fluid filled cavity and furthermore an all glass construction can be advantageous in terms of the sensor fabrication and suitability for certain applications.

We have observed that the temperature sensor 1 is hyper sensitive and responsive (very fast) to ambient temperature changes. For a minute change in ambient temperature there is a corresponding minute change in the volume of the fluid 3 due to thermal expansion of the fluid 3. However, the change in volume causes the diaphragm 11 of the EFPI/FBG sensor 10 to deflect significantly and the volume change per °C depends primarily on the thermal coefficient of expansion of the fluid 3 inside the capillary 2. The high temperature sensitivity is primarily based on:

a) Volume change of the fluid 3, per °C change in temperature and the size of the cavity 14 in the optical sensor 10.
b) The high resolution measurement of small changes in the length of the cavity 14.
c) The thickness of the diaphragm 11, which can generally be in the range of 1$\mu$m to 10$\mu$m, depending on the sensor application requirements, with a preferred thickness in the region of 2$\mu$m to 3$\mu$m. In general, the thinner the diaphragm 11 the more sensitive the temperature sensor 1 is. However, for high resolution temperature measurement applications at elevated temperatures, the fluid 3 may expand enough to apply an excessive force on the diaphragm 11, hence it may be necessary to have a thicker diaphragm in certain applications.

The thermal coefficient of expansion and the quantity of the liquid 3 influence the responsiveness/sensitivity of the high resolution temperature sensor 1 and the measurable temperature range. The responsiveness/sensitivity of the sensor can be tailored for a given application by: selecting the properties and physical geometric dimensions of the FPI based on the sensing element 10; selecting the properties and physical geometric dimensions of the chamber 2; and the properties of the fluid 3. By way of example, Table 1 provides a list of fluids which may be suitable for use in a given application of the sensor and their respective thermal coefficients of expansion.

Table 1

| Liquid | Volumetric Coefficient of Expansion (1/K, 1/°C) |
|---|---|
| Acetic acid | 0.00110 |
| Acetone | 0.00143 |
| Alcohol, ethyl (ethanol) | 0.00109 |
| Alcohol, methyl | 0.00149 |
| Ammonia | 0.00245 |
| Benzene | 0.00125 |
| Bromine | 0.00110 |
| Ethylene glycol | 0.00057 |
| Freon refrigerant R-12 | 0.0026 |
| Hydrochloric acid, 33.2% solution | 0.00046 |
| Isobutyl alcohol | 0.00094 |
| Glycerine (glycerol) | 0.00050 |
| Kerosene, jet fuel | 0.00099 |
| Oil (unused engine oil) | 0.00070 |
| Olive oil | 0.00070 |
| Paraffin oil | 0.000764 |
| n-Pentane | 0.00158 |
| Phenol | 0.0009 |
| Water | 0.000214 |

Example fluids which could be used in the chamber and their coefficients of thermal expansion.

By way of example: consider a temperature sensor 1 comprising a 200$\mu$m ID chamber 2 with a 1mm length containing the oil, a cavity 14 of length 20$\mu$m to 40$\mu$m, and a capillary 5 length of 5 mm to 10 mm. This would yield a theoretical diaphragm 11 deflection of about 125nm/K. Detection of this physical diaphragm deflection is observed as a shift in the optical spectrum and is a function of the FPI construction and the resolution of the optical interrogation equipment and associated processing software. The sensor in this example may be made from quartz glass or borosilicate for example.

Temperature is transduced into a physical volume change in fluid present in the sealed chamber 2 due to the property of thermal expansion of the fluid 3. Therefore, temperature is transduced into a pressure variation which is measured by the FPI sensor 10. The pressure sensor 10 can very accurately measure this pressure variation, which is the result of a temperature variation. Thus there is a direct relationship/correlation between the modulating temperature and the observed pressure modulation.

Because the liquid 3 works as a transducer and the chamber 2 containing the liquid 3 is sealed, a small temperature change (i.e. volume change) causes a pressure change which is detected by the FPI sensor 10. The temperature change can be observed by an interferometer that monitors movements in the diaphragm 11. Furthermore, the pressure measurement derived from observing the diaphragm 11 deflection may be processed by a high resolution algorithm, resulting in an extremely high resolution temperature measurement.

The FBG 12 has a relatively low temperature resolution e.g. 0.1°C, however it has a wide temperature sensing range, e.g.: greater than 500°C. Typically, FBGs can have a temperature measurement resolution of around 0.1°C, which can be increased using high specification optical interrogation hardware/software.

The inclusion of a low resolution / wide range temperature sensing element (Bragg Grating 12) has the advantage of creating a combined low resolution and high resolution temperature sensing device. The result of the combined low and high resolution temperature sensing elements give a high resolution wide bandwidth temperature sensor.

The sensor 1 can be made with the outside diameter of the chamber 2 less than 1mm, which makes the whole system extremely compact. Additionally, the sensor 1 in its current embodiment is a point sensor rather than a distributed sensor, which also offers advantages in many applications.

Since the transmission medium is an optical fiber, signals can also be measured at distances up to kilometres from the measurement point.

The sensor 1 can detect a temperature change less than 0.1mK (i.e. micro Kelvin range) with an example sensitivity, of $7.8\frac{nm}{K}$ shift in the optical spectrum This sensitivity value is calculated through real experimental results, with a large sensor, in diameter and length, compared to the example discussed previously and in addition the sensor evaluated had a small air bubble trapped in the fluid-filled chamber 2, which further reduces its sensitivity. Ideally there should be no air in the fluid-filled chamber. The combination of a Fabry-Perot interferometer (FPI)/fluid-expansion technique for high temperature measurement and an internal FBG for wide range temperature measurement allows for high temperature resolution, and a wide temperature range sensor. Furthermore, the sensor measures the temperature in reflection, which makes the whole system robust, inexpensive and easy to place in both medical and industrial applications. The sensor can be fabricated, for example, from glass, oil and adhesive making it compatible to electromagnetic fields, without any effect on the temperature measurement. When the temperature response of the sensor 1 is compared to a commercial temperature sensor (Bosch model: BM-100) the sensor exhibits a good linearity over the temperature measurement range and furthermore the sensor exhibits a very stable measurement over time.

The temperature sensor 1 is able to measure temperature using two techniques: a) an FGB for low resolution (around 0.1°C) temperature measurement; and b) the oil expansion/contraction for high resolution temperature measurements (e.g. 0.0001°C or better).

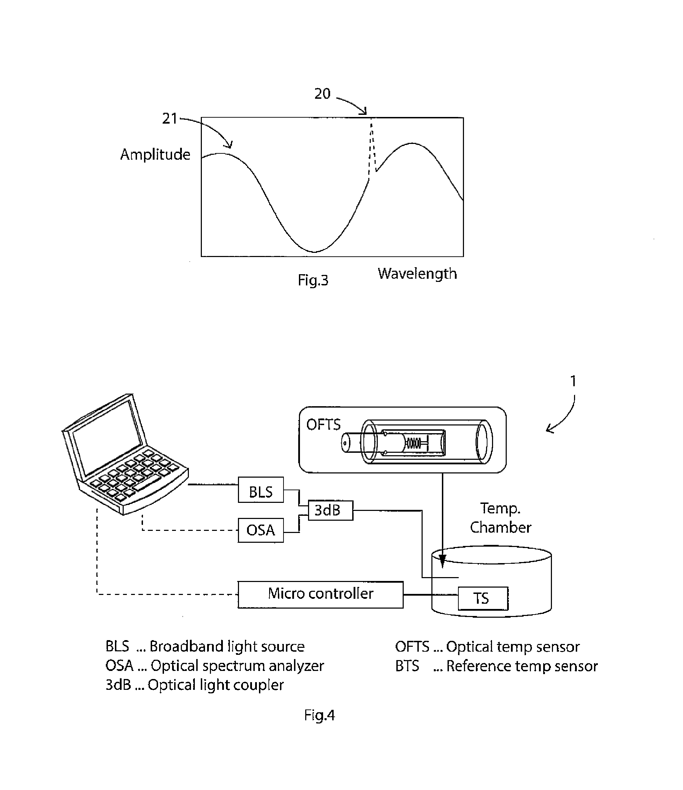

The FBG sensing element 12 causes a peak 20 in the reflected optical spectrum 20 as shown in Fig. 3, which varies with temperature and provides a 'coarse' temperature measurement, with a tolerance of approximately +/- 0.1°C. The FPI/FBG sensor 10 is enclosed and sealed in the fluid-filled chamber 2. The FPI signal modulates a cosine-like reflection in the reflected optical spectrum 21, resulting from deflections in the FPI diaphragm 11, which in turn are caused by a relative pressure difference between the ambient pressure and the pressure in the FPI cavity 14 . This plot in Fig. 3 illustrates the combined FPI response 21 (cosine-like wave form) and the FBG response (a peak in the reflected optical spectrum optical 20).

An increase/decrease in temperature causes the oil volume (or other suitable fluid) to expand/contract due to thermal expansion. An example change in volume of oil per unit temperature might be 7 x10^-4 per K. For example, quartz glass has a volume expansion factor in the region of 0.77x10^-6 per K. For example, a glass based embodiment may exhibit a ratio between the thermal coefficient of expansion of the fluid and of the structural elements, in the order of 1000 as illustrated in Equation 3.

$$\frac{\Delta oil}{\Delta glass} = ca.\,1000. \qquad (3)$$

Small changes in temperature cause a fast and responsive change in the volume of the fluid 3, which is trapped in the sealed capillary 2. This results in significantly high pressure changes, since the oil is incompressible and acts as a linear pressure transducer as described in Equation 3, where $\alpha$ is the volumetric thermal expansion coefficient for the fluid (e.g.: 0.0007).

$$\frac{\Delta V}{V} = \alpha_V \Delta T \qquad (4)$$

Since the high resolution temperature sensor utilises an FPI sensor, changes in temperature can be observed by analysing the FPI spectral response (Fig. 3), which are in the range of 1500nm - 1600nm for the example embodiment. The higher the temperature sensitivity (and with this the measurement resolution) the smaller the ultra-high temperature measurement range tends to be. The inclusion of an FBG (or other suitable 'coarse' temperature measuring device) in the sensor is used as a reference point with a low temperature resolution (e.g. 0.1°C), and a wide temperature range (e.g. -100°C to +100°C). Combining both temperature measuring techniques results in a high resolution and wide range temperature sensor.

Example

By way of example, a possible embodiment of a full measurement system incorporating the herein disclosed invention is illustrated in Fig. 4. The main components of the system illustrated in Fig. 4 include a broadband light source (BLS), a 3dB-coupler, an optical spectrum analyser (OSA) and a computer. To optimize the temperature measurement resolution, an advanced algorithm was developed to further analyse/process the OSA output and achieve a very high temperature resolution.

The example measurement system illustrated in Fig. 4 uses a BLS from Exalos, and emits light in the C+L band from 1520 nm - 1600nm with a Gaussian spectral power distribution and a total radiant power of 10mW. Light from the BLS travels through the 3dB coupler to the end of an optical fiber where the temperature sensor 1 (labelled OFTS in Fig. 4) resides. Light which enters the OFTS is modulated and a portion of the incident light is reflected and travels back to the 3dB coupler into the optical spectrum analyzer (OSA) (e.g. I-MON 512 from Ibsen Photonics), which has a resolution of $0.166 \frac{nm}{pixel}$ and an accuracy of 5pm. Analysis and processing of the OSA spectral interrogation can be used to determine the temperature at the measurement point.

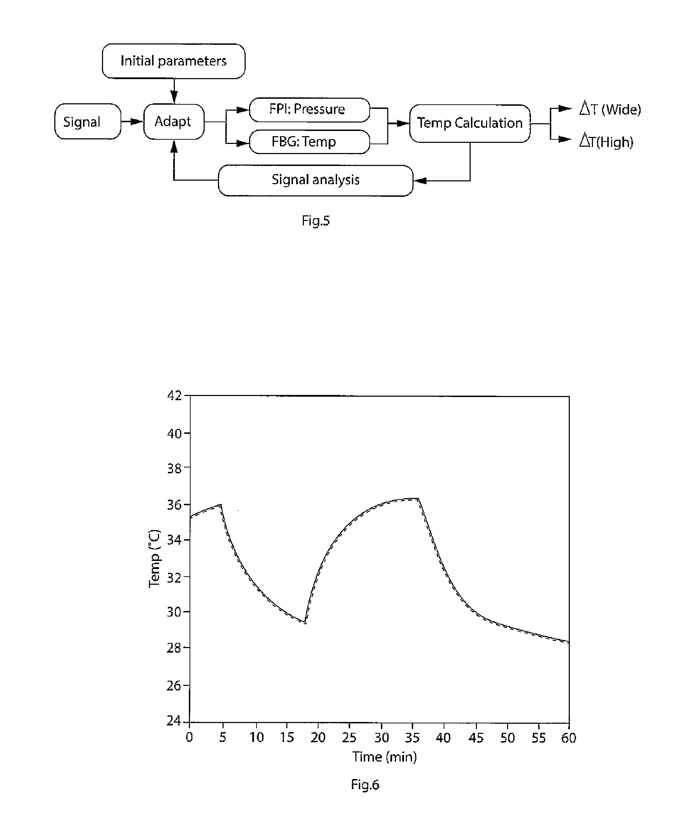

Software Example (Fig. 5)

The signal from the OSA is processed in order to determine the 'coarse' temperature observed by the FBG and to generate the FPI pressure measurement, which correlates with the high resolution temperature measurement. The OSA spectral signal is repaired, cleaned and adapted to improve the quality of the signal. The simultaneous measurement of pressure and temperature are undertaken by an FBG and FPI tracking algorithm. The FBG reading is used to analyze the wide range of the temperature. With a sensitivity of 0.01nm/K (standard FBG sensitivity) a range of more than 500K can be observed, and in general has an upper limit determined by the temperature at which the glass used in the construction of the sensor starts to deform. The FPI based pressure measurement ΔP is used to determine the high resolution temperature measurement. An overview of the software algorithm used to generate intermediate results is shown in Fig. 5.

Fig. 6 provides an example of the temperature sensor being compared to a commercial sensor when the temperature is varied in a temperature chamber. The temperature chamber was heated and cooled for the time period of 1 hour. The sensitivity of the sensor was measured over a 7K temperature range with a shift of $\frac{53nm}{7K} = 7.6 \frac{nm}{K}$ in the observed optical spectrum.

It will be appreciated that the sensor of the invention achieves:

- Ultra high temperature measurement resolution.
- Very rapid response (high bandwidth)
- Optical fibre based sensor with the inherent advantages of same e.g. immune to EMI
- Very small physical dimensions (e.g. less than 1mm in diameter)
- Can measure temperatures a long distance from the processing equipment as the optical fibre can be many 100s of meters in length

Optical fibers have very low attenuation. This makes it possible to use the sensor at long distances from the measuring point. Also, optical fibers are inexpensive, and are not affected by electromagnetic interference. Also, the system does not have to be cooled/isolated unlike some electronic systems.

The herein disclosed sensor is suitable for in-vivo and ex-vivo calorific based measurement of radiation dose. When a material is exposed to radiation it will heat up due the incident energy. For example 4.16 Gy of incident radiation would produce the same amount of energy it would take to heat up 1mm$^3$ of water 1 °C. Hence, it is possible to use the sensor to measure the temperature change experienced by a material or tissue or fluid when exposed to radiation. By way of example, the sensor may be constructed entirely from glass and a biocompatible fluid. Due to the miniature size of the sensor and its biocompatible nature, the sensor may be colocated at a tumour site while radiotherapy is being administered. The radiation incident on the tumour will cause a temperature change in the tumour tissue. This temperature change can be used to assess the quantity of radiation administered.

The invention is not limited to the embodiments described but may be varied in construction and detail. Fluids other than an oil may also be used to fill the chamber 2. It is not essential to have the EFPI and FBG on the same fibre of the internal pressure sensor. However, it can be advantageous, allowing an extended combined sensitivity range.

**Claims**

1. A temperature sensor (1) comprising:

   a pressure sensor (10) comprising:

   a light guide (4),
   a cavity (14) at a distal end of the light guide,
   a diaphragm (11) forming a wall of the cavity and being configured to deflect with applied pressure,
   a detector to detect changes in light reflection due to deflection of the diaphragm;

   a chamber (2) containing at least the distal end of the pressure sensor and a fluid (3) which changes volume in response to temperature change sufficient to change the pressure applied on the diaphragm (11); and
   a processor configured to process pressure data and/or light reflection data and to generate an output indicating temperature.

2. A temperature sensor as claimed in claim 1, wherein the chamber fluid (3) is a liquid.

3. A temperature sensor as claimed in claim 2, wherein the liquid is an oil (3).

4. A temperature sensor as claimed in claims 1 or 2, wherein the chamber (2) has a volume of at least 0.1mm$^3$.

5. A temperature sensor as claimed in any preceding claim, wherein the fluid chamber (2) is cylindrical.

6. A temperature sensor as claimed in any preceding claim, wherein the pressure sensor cavity is a Fabry-Perot interferometer.

7. A temperature sensor as claimed in any preceding claim, wherein the pressure sensor includes a fibre Bragg grating (12) for coarse temperature measurement, in which thermal expansion or construction of the FBG causes a shift of the Bragg wavelength.

8. A temperature sensor as claimed in claim 7, wherein the grating has a temperature resolution of 0.1°C or higher.

9. A temperature sensor as claimed in claims 7 or 8, wherein the grating (12) is in-fiber.

10. A temperature sensor as claimed in any preceding claim, wherein the diaphragm (11) has a thickness in the range of 1$\mu$m to 10$\mu$m.

11. A temperature sensor as claimed in any preceding claim, wherein the diaphragm has a diameter which is at least 40 times the thickness.

12. A temperature sensor as claimed in any preceding claim, wherein the chamber (2) is transparent.

13. A temperature sensor as claimed in any preceding claim, wherein the chamber has an outside lateral dimension of less than 1mm.

14. A temperature sensor as claimed in any preceding claim, wherein the light guide (4) is an optical fibre.

15. A method of measuring temperature changes in human tissue or fluids, the method comprising the steps of inserting a chamber (2) of a sensor (1) of any of claims 1 to 14 into the tissue or fluid and monitoring outputs from the processor.

Fig.1

Fig.2

Fig.3

BLS ... Broadband light source
OSA ... Optical spectrum analyzer
3dB ... Optical light coupler

OFTS ... Optical temp sensor
BTS ... Reference temp sensor

Fig.4

Fig.5

Fig.6

Europäisches
Patentamt

European
Patent Office

Office européen
des brevets

# EUROPEAN SEARCH REPORT

Application Number

EP 15 16 8623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SVEN POEGGEL ET AL: "Miniature Optical fiber combined pressure- and temperature sensor for medical applications", 2013 IEEE SENSORS, IEEE, 28 October 2012 (2012-10-28), pages 1-4, XP032308758, ISSN: 1930-0395, DOI: 10.1109/ICSENS.2012.6411305 * abstract * * figures 1-3 * * page 1, paragraph I - page 4, paragraph IV * | 1-15 | INV. G01K5/02 G01K11/32 G01K5/32 |
| A | WO 2004/009957 A1 (HALLIBURTON ENERGY SERV INC [US]; SKINNER NEAL G [US]; DENNIS JOHN R []) 29 January 2004 (2004-01-29) * abstract * * figures 2-6 * * page 6, line 12 - page 11, line 18 * | 1-15 | |
| A | HYUN-KYU KANG ET AL: "Simultaneous monitoring of strain and temperature during and after cure of unsymmetric composite laminate using fibre-optic sensors; Simultaneous monitoring of strain and temperature of composite laminate using fibre-optic sensors", SMART MATERIALS AND STRUCTURES, IOP PUBLISHING LTD., BRISTOL, GB, vol. 12, no. 1, 10 January 2003 (2003-01-10), pages 29-35, XP020071708, ISSN: 0964-1726, DOI: 10.1088/0964-1726/12/1/304 * abstract * * page 2, left-hand column - page 3, right-hand column * | 1-15 | TECHNICAL FIELDS SEARCHED (IPC) G01K G01L |

The present search report has been drawn up for all claims

| Place of search | Date of completion of the search | Examiner |
|---|---|---|
| The Hague | 25 September 2015 | Totò, Nicola |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 096 117 A1**

## ANNEX TO THE EUROPEAN SEARCH REPORT
## ON EUROPEAN PATENT APPLICATION NO.

EP 15 16 8623

25-09-2015

| Patent document cited in search report | Publication date | Patent family member(s) | | Publication date |
|---|---|---|---|---|
| WO 2004009957 A1 | 29-01-2004 | AU | 2002327293 A1 | 09-02-2004 |
| | | CA | 2442413 A1 | 23-01-2004 |
| | | EP | 1523607 A1 | 20-04-2005 |
| | | NO | 326682 B1 | 26-01-2009 |
| | | US | 2004016295 A1 | 29-01-2004 |
| | | WO | 2004009957 A1 | 29-01-2004 |

EPO FORM P0459

**EP 3 096 117 A1**

**Patent documents cited in the description**

- US 8764678 B